Europäisches Patentamt

(19) European Patent Office

Office européen des brevets

(11) Publication number: **0 309 117 B1**

(12) **EUROPEAN PATENT SPECIFICATION**

(45) Date of publication of patent specification:
**17.07.91 Bulletin 91/29**

(51) Int. Cl.⁵: **C03B 37/014**

(21) Application number: **88308249.7**

(22) Date of filing: **07.09.88**

(54) **Manufacture of optical fibre preforms.**

(30) Priority: **25.09.87 GB 8722631**

(43) Date of publication of application:
**29.03.89 Bulletin 89/13**

(45) Publication of the grant of the patent:
**17.07.91 Bulletin 91/29**

(84) Designated Contracting States:
**BE DE FR GR IT NL**

(56) References cited:
**EP-A- 190 748**
**WO-A-86/07347**
**GB-A- 2 093 829**
**GB-A- 2 149 779**
**GB-A- 2 180 832**

(73) Proprietor: **THE GENERAL ELECTRIC
COMPANY, p.l.c.
1 Stanhope Gate
London W1A 1EH (GB)**

(72) Inventor: **Greenham, Adrian Clement
19 Bulmer Gardens Kenton
Harrow Middlesex (GB)**
Inventor: **Ong, Tin Ming
19 Gainsborough Gardens Sudbury Hill
Greenford Middlesex UB6 0JG (GB)**
Inventor: **Nichols, Bruce Armstrong
20 East Court
Wembley Middlesey HA0 3QJ (GB)**

(74) Representative: **Maury, Richard Philip
The General Electric Company p.l.c. G.E.C.
Patent Department (Wembley Office) Hirst
Research Centre East Lane
Wembley Middlesex HA9 7PP (GB)**

EP 0 309 117 B1

## Description

This invention relates to the manufacture of glass preforms, from which optical fibre waveguides can be produced by drawings using a vapour deposition process. Commonly, the method used is of the type (hereinafter referred to as "the type specified") in which a chemical reaction is caused to take place in a gaseous reaction mixture so as to form a coating on the inner surface of a glass tube wherein the reaction is promoted by the generation of a plasma in the mixture.

Normally the gaseous reaction mixture consists of a carrier gas (usually oxygen) and volatile precursors (usually halides such as silicon tetrachloride). These may be introduced into the region of the tube in which the plasma is produced by way of a perforated central dispenser tube.

This particular method, and forms of the apparatus by which it may be carried out, are disclosed in British Patent Application Nos. 2093829, 2134099 and 2151609, to which reference should be made for further details.

Thus GB-A-2093829 discloses a method of manufacturing optical fibre preforms by means of a deposition process in which a carrier gas incorporating oxygen together with the vapours of glass precursors capable of reacting with oxygen are caused to flow through a dispenser tube and emerge through perforations in the dispenser tube into the reaction zone of a substrate tube coaxially surrounding the dispenser tube, which substrate tube lies within and is heated by a furnace, while a plasma is generated in the space between the dispenser tube and the substrate tube, to cause the reactions to take place and an oxide coating to be deposited on the surface of the substrate tube.

It is advantageous to dope preforms for fibre lasers and fibre amplifiers with rare earth elements. However, the rare earth halides are solids at room temperature and have low vapour pressures relative to silicon tetrachloride even when heated to high temperatures. For example, neodymium chloride has a vapour pressure of approximately 86.5 Pa (0.65 torr) at 1000°C.

It has been proposed in GB-A-2180832 to deposit rare earth dopant precursor in a reservoir formed in one end of a substrate tube, and to heat the reservoir in order to evaporate the dopant which is then carried along with other reactants and deposits in a reaction zone.

EP-A-0190748 discloses a gas reaction process making use of flame hydrolysis in which gaseous raw material for forming a deposit on a rod in order to form an optical fibre, is fed through a multipassage gas burner, and means are provided for heating at least one of the gas passages in order to prevent condensation of the raw material within the burner.

One object of this invention is to provide an improved method of manufacturing an optical fibre preform utilising a heated reservoir, and in which the preforms are doped with elements such as rare earths, but which is a modification of the plasma reaction vapour deposition process forming the subject of GB-A-2093892.

Another object of this invention is to provide a method of manufacturing an optical fibre preform by such a vapour deposition process in which the amount of vaporized substance deposited can be accurately determined.

According to the invention there is provided a method of manufacturing optical fibre preforms by means of a deposition process in which a carrier gas incorporating oxygen together with the vapours of glass precursors capable of reacting with oxygen are caused to flow through a dispenser tube and emerge through perforations in the dispenser tube into the reaction zone of a substrate tube coaxially surrounding the dispenser tube, which substrate tube lies within and is heated by a furnance, while a plasma is generated in the space between the dispenser tube and the substrate tube, to cause the reactions to take place and an oxide coating to be deposited on the surface of the substrate tube, which is characterised in that in a part of the dispenser tube lying within the furnace upstream of the perforations there is provided a reservoir, and that in the reservoir a rare earth dopant precursor is introduced, such that it is heated to a controlled temperature so as to cause the dopant precursor to be evaporated and flow, with the carrier gas and the various glass precursors, into the reaction zone where it reacts and deposits as a layer on the substrate tube surface, there being a temperature gradient over an unperforated part of the dispenser tube within the furnance, upstream of the perforations, which temperature gradient rises in the direction of the reaction zone, and the reservoir either being moved along the temperature gradient to a selected position where it is heated to a selected temperature during the formation of the preform, so that the dopant precursor is evaporated at a constant predetermined rate and forms a uniform deposited layer, or being moved along the temperature gradient during the formation of the preform to provide different concentrations of dopant in different regions of the preform.

The invention also provides an apparatus for the manufacture of an optical fibre preform by a vapour deposition process in which a carrier gas incorporating oxygen together with the vapours of glass precursors capable of reacting with oxygen are caused to flow into a reaction zone within a preform tube, which apparatus comprises a furnace arranged to accommodate the preform tube, a dispenser tube through which said carrier gas and vapours are caused to flow, the dispenser tube having perforations along a part of its length which is arranged to be located within the preform tube, which perforations enable the carrier gas and vapours to emerge from the dispenser tube into the reaction zone, and means for generating a plasma within the preform tube whilst it is heated by the furnance, for causing a chemical reaction to take place and a deposit to be formed on the interior surface of the preform tube, which is characterised in that the arrangement is such that, in use of the apparatus, there is a temperature gradient over an unperforated part of the dispenser tube within the furnace upstream of the perforations, which temperature gradient rises in the direction of the reaction zone, and in that the dispenser tube has at least one reservoir for containing a rare earth dopant precursor located in a region of the tube within said temperature gradient, for causing the dopant precursor to be evaporated and carried into the reaction zone where it reacts and deposits as a layer on the surface of the preform, the reservoir being movable along the temperature gradient to enable its position along this temperature gradient to be selected so that it is heated to a selected temperature during the formation of a preform, whereby the dopant precursor is evaporated at a constant predetermined rate to form a uniform deposited layer, or to enable it to be moved along the temperature gradient during the formation of a preform to provide different concentrations of dopant in different regions of the preform.

Preferably, each substance is held in a reservoir which is a bulb formed in the non-perforated region of the tube. This region may be formed of two sections of glass tubing, the first section having a bulb which is open to receive the second section which protrudes into the bulb. Each substance is then held between the base of the bulb and the protruding bottom section of tubing.

A plurality of bulbs may be formed in series in the non-perforated region of the tube. In this way, the preform can be simultaneously doped with substances of differing vaporization temperatures by placing each dopant in a bulb whose temperature is sufficient to cause evaporation.

By knowing the temperature gradient along the tube the temperature of each bulb can easily be determined from its position. From the relationship between the vapour pressure and the temperature, the rate of sublimation of each substance may be calculated. Hence, for a known flow and pressure of carrier gas, the amount of vaporised substance deposited can also be calculated and controlled by moving the bulb up or down the temperature gradient.

By moving the bulb along the temperature gradient during the formation of the preform, the concentration of dopant in different regions of the preform may be varied. If the bulb has a temperature which is sufficiently high to evaporate the dopant throughout the formation of the preform, both the cladding and the core will be doped. However, the bulb may be moved from a region on the temperature gradient where it is too cold for dopant evaporation (a 'cold' region) to one where it is sufficiently hot (a 'hot' region) during the process. Thus if the bulb is in a 'cold' region during the cladding deposition and in a 'hot' region during core disposition, the preform formed will have an undoped cladding and a doped core. Alternatively, the preform may be formed with an undoped core and a doped cladding by moving the bulb from a 'hot' region during cladding deposition to a 'cold' region during core deposition.

Preferably, the whole of the perforated region is held at a uniform temperature so as to obtain a uniform deposited layer.

The substance used may be a rare earth halide such as neodymium chloride thus enabling preforms to be doped with rare earths.

The method of the invention will now be further explained by way of example with reference to the accompanying drawings.

Figure 1 shows one form of apparatus for manufacturing preforms schematically in accordance with the method of the invention.

Figure 2 shows the temperature gradient along the dispenser tube.

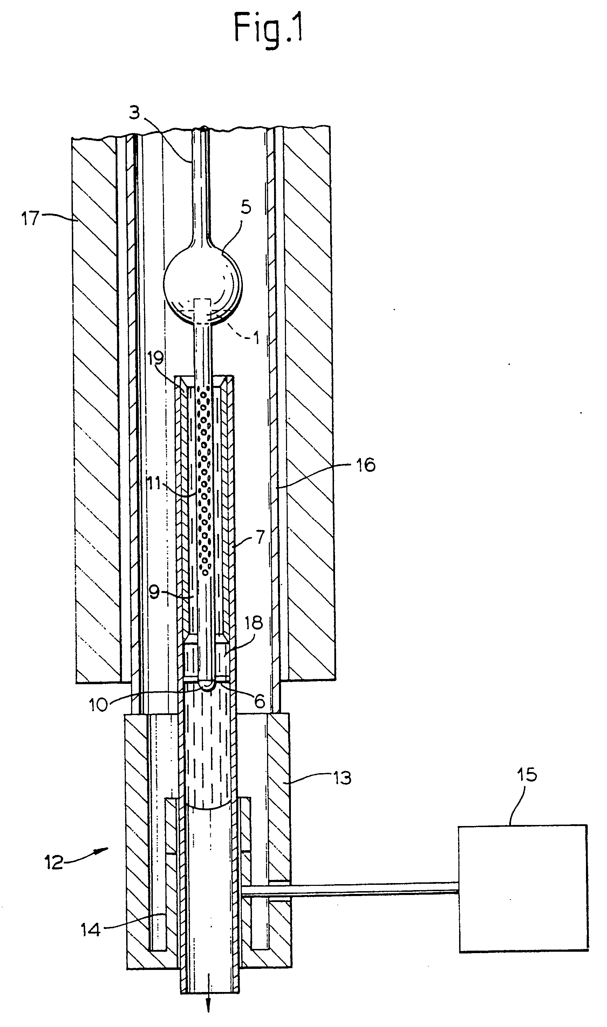

Referring to Figure 1, the upper end of the dispenser tube 3 is connected to means (not shown) for supplying a mixture of carrier gas and reactant vapour to the tube. The lower end of the tube 3 is closed and the wall of the tube in that region is pierced by a multiplicity of perforations 11 to permit egress of the reactants and carier gas into a space 9 within a surrounding substrate tube 7, which space constitutes a reaction zone.

A microwave cavity 12 formed of an outer cylinder 13 and an inner cylinder 14 is located adjacent to a gas exit end of the substrate tube 7. The lower end of the tube 1 is inserted through the inner cylinder 14. Power is supplied to the cavity by a microwave generator 15 so as to establish a plasma with the space 9. A waveguide tube 16 of circular cross-section is also positioned round the substrate tube 7, extending from the microwave cavity. The tube 16 is surrounded by a tubular electrical furnace 17.

Above the perforated lower region of the dispenser tube 3, there is a bulb 5 into which the top end of this lower region protrudes. A quantity of a rare earth halide 1 is held within the bulb 5 around the protruding end of the tube and, in use of the apparatus, it is arranged to be vaporized by the heat from the furnace 17. The temperature gradient of the furnace is such that the vaporized rare earth halide travels down the dispenser tube 3 with the carrier gas and reactant vapour and passes through the perforations 11 into the reaction zone 9. There the reactants (now including the rare earth halide) react with the carrier gas to form a deposit on the interior wall of the substrate tube 7.

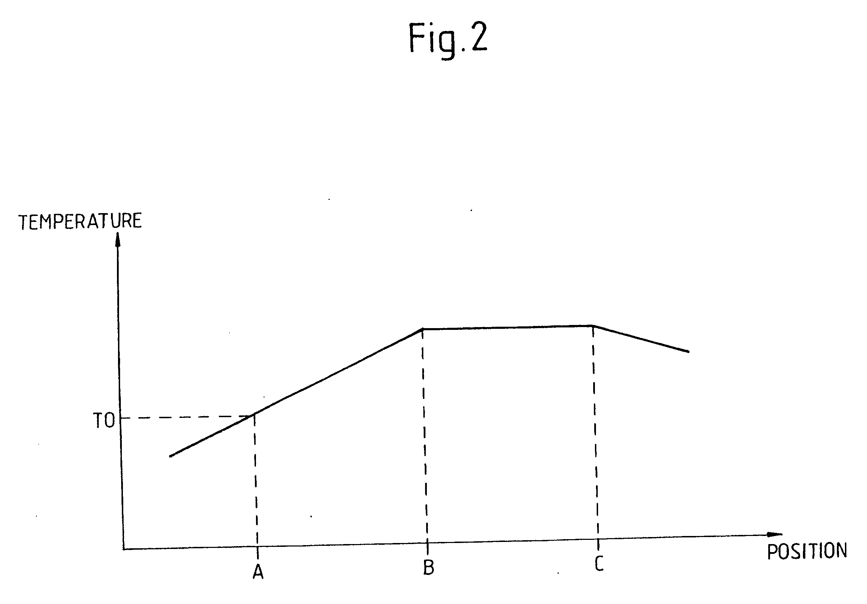

Referring to Figure 2, the temperature of the dispenser tube over its whole length is shown. If $T_0$ is the

vaporization temperature of the dopant, the bulb may be placed at any position between A and B. As the temperature gradient from A to B is positive, the vaporized dopant will not condense on the walls of the dispenser tube. The region between B and C is the reaction zone. Here, the temperature is kept constant so as to ensure a uniform deposited layer on the substrate tube.

## Claims

1. A method of manufacturing optical fibre preforms by means of a deposition process in which a carrier gas incorporating oxygen together with the vapours of glass precursors capable of reacting with oxygen are caused to flow through a dispenser tube (3) and emerge through perforations (11) in the dispenser tube into the reaction zone (9) of a substrate tube (7) coaxially surrounding the dispenser tube, which substrate tube lies within and is heated by a furnace (17), while a plasma is generated in the space between the dispenser tube and the substrate tube, to cause the reactions to take place and an oxide coating (19) to be deposited on the surface of the substrate tube, characterised in that in a part of the dispenser tube (3) lying within the furnace (17) upstream of the perforations (11) there is provided a reservoir (5), and that in the reservoir a rare earth dopant precursor (1) is introduced, such that it is heated to a controlled temperature so as to cause the dopant precursor to be evaporated and flow, with the carrier gas and the various glass precursors, into the reaction zone (9) where it reacts and deposits as a layer on the substrate tube surface, there being a temperature gradient over an unperforated part of the dispenser tube within the furnace, upstream of the perforations, which temperature gradient rises in the direction of the reaction zone, and the reservoir either being moved along the temperature gradient to a selected position where it is heated to a selected temperature during the formation of the preform, so that the dopant precursor is evaporated at a constant predetermined rate and forms a uniform deposited layer, or being moved along the temperature gradient during the formation of the preform to provide different concentrations of dopant in different regions of the preform.

2. Apparatus for the manufacture of an optical fibre preform by a vapour deposition process in which a carrier gas incorporating oxygen together with the vapours of glass precursors capable of reacting with oxygen are caused to flow into a reaction zone (9) within a preform tube (7), which apparatus comprises a furnance (17) arranged to accommodate the preform tube, a dispenser tube (3) through which said carrier gas and vapours are caused to flow, the dispenser tube having perforations (11) along a part of its length which is arranged to be located within the preform tube, which perforations enable the carrier gas and vapours to emerge from the dispenser tube into the reaction zone, and means (15) for generating a plasma within the preform tube whilst it is heated by the furnace, for causing a chemical reaction to take place and a deposit (19) to be formed on the interior surface of the preform tube, characterised in that the arrangement is such that, in use of the apparatus, there is a temperature gradient over an unperforated part of the dispenser tube within the furnace upstream of the perforations (11), which temperature gradient rises in the direction of the reaction zone, and in that the dispenser tube (3) has at least one reservoir (5) for containing a rare earth dopant precursor located in a region of the tube within said temperature gradient, for causing the dopant precursor to be evaporated and carried into the reaction zone where it reacts and deposits as a layer on the surface of the preform, the reservoir being movable along the temperature gradient to enable its position along this temperate gradient to be selected so that it is heated to a selected temperature during the formation of a preform, whereby the dopant precursor is evaporated at a constant predetermined rate to form a uniform deposited layer, or to enable it to be moved along the temperature gradient during the formation of a preform to povide different concentrations of dopant in different regions of the preform.

3. Apparatus according to Claim 2 characterised in that the or each reservoir (5) is a bulb formed in the non-perforated region of the dispenser tube (3).

4. Apparatus according to Claim 3 characterised in that the non-perforated region is formed of two sections of glass tubing, the first section having a bulb (5) which is open to receive the second section which protrudes into the bulb.

5. Apparatus according to Claim 3 or 4 characterised in that a plurality of bulbs (5) are formed in series in the non-perforated region of the tube (3).

## Patentansprüche

1. Eine Methode zur Herstellung von Optikfaservorformlingen nach einem Abscheideverfahren, bei dem ein Sauerstoff sowie die zur Reaktion mit Sauerstoff fähigen Dämpfe von Vorstoffen des Glases enthaltendes Träger zum Durchströmen einer Ausgaberöhre (3) und zum Austreten durch in der Ausgaberöhre befindliche Lochungen (11) in die Reaktionszone (9) einer Substratröhre (7), die die Ausgaberöhre koaxial umgibt, gebracht wird, wobei sich die besagte Substratröhre innerhalb eines Ofens (17) befindet und durch diesen erhitzt wird, während in dem Zwischenraum der Ausgaberöhre und der Substratröhre ein Plasma erzeugt wird, um den Ablauf der Reaktionen und Abscheidung eines Oxidüberzugs (19) an der Oberfläche der Substratröhre zu bewirken, dadurch gekennzeichnet, daß in einem innerhalb des Ofens (17) stromaufwärts von den Lochungen (11) befindlichen Teil der Ausgaberöhre (3) ein Gefäß (5) vorgesehen ist und daß ein in seltener Erde bestehender dotierender Vorstoff (1) in das Gefäß eingeführt wird, um auf eine geregelte Temperatur erhitzt zu werden, so daß der dotierende Vorstoff verdampft wird und gemeinsam mit dem Trägergas und den verschiedenen Vorstoffen des Glases in die Reaktionszone (9) strömt, wo er zur Reaktion gelangt und sich als Schicht an der Oberfläche der Substratröhre absetzt, wobei entlang eines ungelochten Teils des Ausgaberohrs innerhalb des Ofens, stromaufwärts von den Lochungen, ein Temperaturgefälle besteht, das in Richtung der Reaktionszone zunimmt und das Gefäß entweder entlang des Temperaturgefälles in eine gewählte Lage bewegt wird, in der es während der Bildung des Vorformlings auf eine gewählte Temperatur erhitzt wird, so daß der dotierende Vorstoff mit einer konstanten, vorbestimmten Geschwindigkeit verdampft wird und eine gleichförmige Absetzschicht bildet, oder während der Bildung des Vorformlings entlang des Temperaturgefälles bewegt wird, um in verschiedenen Bereichen des Vorformlings verschiedene Konzentrationen des dotierenden Stoffes vorzusehen.

2. Apparat zur Herstellung eines Optikfaservorformlings nach einem Bedampfungsverfahren, bei dem ein Sauerstoff sowie die mit Sauerstoff zur Reaktion fähigen Vorstoffe von Glas enthaltendes Trägergas zum Strömen in eine Reaktionszone (9) innerhalb einer Vorformröhre (7) gebracht wird, wobei der Apparat einen zur Aufnahme der Vorformröhre eingerichteten Ofen (17), eine Ausgaberöhre (3), durch die hindurch das besagte Trägergas und die Dämpfe zum Strömen gebracht werden, wobei die Ausgaberöhre entlang eines zur Anordnung innerhalb der Vorformröhre bestimmten Teiles ihrer Länge Lochungen (11) aufweist, die dem Trägergas und den Dämpfen die Möglichkeit zum Entweichen aus der Ausgaberöhre in die Reaktionszone bieten, sowie Mittel (15) zum Erzeugen eines Plasmas innerhalb der Vorformröhre umfaßt, während diese durch den Ofen erhitzt wird, um eine chemische Reaktion und das Entstehen einer Ablagerung (19) an der inneren Oberfläche der Vorformröhre zu veranlassen, dadurch gekennzeichnet, daß die Anordnung so beschaffen ist, daß bei Gebrauch des Apparats entlang eines ungelochten Teils der Ausgaberöhre innerhalb der Ofens stromaufwärts von den Lochungen (11) ein Temperaturgefälle besteht, das in Richtung der Reaktionszone zunimmt, sowie dadurch, daß die Ausgaberöhre (3) mindestens ein Gefäß (5) für einen in seltener Erde bestehenden dotierenden Vorstoff umfaßt, das sich in einem Bereich der Röhre innerhalb des besagten Temperaturgefälles befindet, um Verdampfung des dotierenden Vorstoffes und dessen Beförderung in die Reaktionszone zu bewirken, wo er zur Reaktion gelangt und sich an der Oberfläche des Vorformlings als Schicht absetzt, wobei das besagte Gefäß entlang des Temperaturgefälles beweglich ist, so daß ihre Lage entlang dieses Temperaturgefälles so gewählt werden kann, daß das besagte Gefäß während der Bildung eines Vorformlings auf eine gewählte Temperatur erhitzt wird, wodurch der dotierende Vorstoff mit einer konstanten vorbestimmten Geschwindigkeit verdampft wird, so daß er eine gleichförmige Absetzschicht bildet, oder um während der Bildung eines Vorformlings die Dehnung des Gefäßes entlang eines Temperaturgefälles zu ermöglichen, so daß in verschiedenen Bereichen des Vorformlings verschiedene Konzentrationen des dotierenden Stoffes vorgesehen werden.

3. Apparat nach Anspruch 2, dadurch gekennzeichnet, daß das oder jedes Gefäß (5) ein in dem nicht gelochten Bereich der Ausgaberöhre (3) gebildeter Kolben ist.

4. Apparat nach Anspruch 3, dadurch gekennzeichnet, daß der nicht gelochte Bereich zwischen zwei Abschnitten der Glasröhre gebildet wird, wobei der erste Abschnitt einen Kolben (5) umfaßt, der offen ist, so daß er den zweiten, in den Kolben eindringenden Abschnitt aufnimmt.

5. Apparat nach Anspruch 3 oder 4, dadurch gekennzeichnet, daß eine Mehrzahl von Kolben (5) in dem nicht gelochten Bereich der Röhre (3) in Reihe gebildet werden.

## Revendications

1. Méthode de fabrication de préformes de fibre optique par un procédé de dépôt dans lequel un gaz porteur comportant de l'oxygène en même temps que les vapeurs de précurseurs du verre capables de réagir avec l'oxygène doivent circuler dans un tube distributeur (3) et émerger, par des perforations (11) dans le tube distributeur, dans la zone de réaction (9) d'un tube sous-jacent (7) entourant coaxialement le tube distributeur, ledit tube sous-jacent étant situé dans un four (17) par lequel il est chauffé, tandis qu'un plasma est créé dans l'espace entre le tube distributeur et le tube sous-jacent, pour provoquer les réactions et le dépôt d'un revêtement d'oxyde (19) sur la surface du tube sous-jacent, caractérisée en ce que, dans une partie du tube distributeur (3) située dans le four (17) en amont des perforations (11), est prévu un réservoir (5), et que dans le réservoir est introduit un précurseur de dopant (1) aux terres rares, de telle sorte qu'il est chauffé à une température réglée de manière à faire évaporer le précurseur de dopant et à le faire circuler, avec le gaz porteur et les divers précurseurs du verre, dans la zone de réaction (9) où il réagit et se dépose en une couche sur la surface du tube sous-jacent, un gradient de température existant au-dessus d'une partie non perforée du tube distributeur à l'intérieur du four, en amont des perforations, ledit gradient de température montant dans la direction de la zone de réaction, et le réservoir étant soit déplacé le long du gradient de température jusqu'à une position sélectionnée où il est chauffé à une température sélectionnée pendant la formation de la préforme, de telle sorte que le précurseur de dopant s'évapore à une vitesse prédéterminée constante et forme une couche déposée uniforme, soit déplacé le long du gradient de température pendant la formation de la préforme pour fournir différentes concentrations de dopant dans différentes régions de la préforme.

2. Appareil pour la fabrication d'une préforme de fibre optique par un procédé de dépôt de vapeur dans lequel un gaz porteur comportant de l'oxygène ainsi que les vapeurs de précurseurs du verre capables de réagir avec l'oxygène doivent circuler dans une zone de réaction (9) à l'intérieur d'un tube de préforme (7), ledit appareil étant constitué d'un four (17) agencé pour contenir le tube de préforme, d'un tube distributeur (3) dans lequel doivent circuler lesdits gaz porteur et vapeurs, le tube distributeur ayant des perforations (11) sur une partie de sa longueur qui est disposée pour être située à l'intérieur du tube de préforme, lesdites perforations permettant au gaz porteur et aux vapeurs d'émerger du tube distributeur dans la zone de réaction, et d'un moyen (15) de création d'un plasma à l'intérieur du tube de préforme pendant qu'il est chauffé par le four, pour causer une réaction chimique et la formation d'un dépôt (19) sur la surface intérieure du tube de préforme, caractérisé en ce que l'agencement est tel que, dans l'utilisation de l'appareil, il y a un gradient de température au-dessus d'une partie non perforée du tube distributeur à l'interieur du four en amont des perforations (11), ledit gradient de température montant dans la direction de la zone de réaction, et en ce que le tube distributeur (3) a au moins un réservoir (5) devant contenir un précurseur dopant aux terres rares situé dans une région du tube à l'intérieur dudit gradient de température, pour faire évaporer le précurseur dopant et le faire entraîner dans la zone de réaction où il réagit et se dépose en une couche sur la surface de la préforme, le réservoir pouvant être déplacé le long du gradient de température pour que sa position le long de ce gradient de température puisse être sélectionnée de telle sorte qu'il soit chauffé à une température sélectionnée pendant la formation d'une préforme, le précurseur de dopant s'évaporant ainsi à une vitesse pré-déterminée constante pour former une couche déposée uniforme, ou pour qu'il puisse être déplacé le long du gradient de température pendant la formation d'une préforme pour donner différentes concentrations de dopant dans différentes régions de la préforme.

3. Appareil selon la revendication 2 caractérisé en ce que le ou chaque réservoir (5) est une boule formée dans la région non perforée du tube distributeur (3).

4. Appareil selon la revendication 3 caractérisé en ce que la région non perforée est formée de deux sections de tube de verre, la première section ayant une boule (5) qui est ouverte pour recevoir la deuxième section qui dépasse dans la boule.

5. Appareil selon la revendication 3 ou 4 caractérisé en ce qu'une pluralité de boules (5) sont formées en série dans la région non perforée du tube (3).

# Fig.1

# Fig.2

EP 0 309 117 B1